# EUROPÄISCHE PATENTSCHRIFT

(11) **EP 0 600 169 B1**
(45) Veröffentlichungstag und Bekanntmachung des Hinweises auf die Patenterteilung: **03.05.1995**
(21) Anmeldenummer: 93114593.2
(22) Anmeldetag: 10.09.1993
(51) Int. Cl.: A01K 3/00

(54) **Amphibienleitwand**
Guiding fence for amphibia
Paroi de guidage pour amphibie

(30) Priorität: 30.11.1992 DE 4240229
(43) Veröffentlichungstag der Anmeldung: 08.06.1994
(73) Patentinhaber: ACO Severin Ahlmann GmbH & Co. KG, D-24755 Rendsburg (DE)
(72) Erfinder: Bladt, Wulf, D-24782 Büdelsdorf (DE); Lüneburg, Henning, D-23623 Ahrensbök-Schwochel (DE)
(74) Vertreter: MEISSNER, BOLTE & PARTNER

(56) Entgegenhaltungen:
- EP-A- 0 273 338
- DE-U- 8 716 307
- DE-U- 8 906 534

## Beschreibung

Die Erfindung betrifft eine Amphibienleitwand nach dem Oberbegriff des Patentanspruchs 1 sowie ein Verfahren zum Aufbau der Amphibienleitwand.

Eine Vielzahl von Amphibien, insbesondere Kröten, Frösche und Lurche, suchen Gewässer nur zur Paarungs- und Laichzeit auf. Danach wandern sie wieder in die Umgebung ab. Hierbei werden oftmals erhebliche Strecken zurückgelegt.

Aufgrund der Erschließung der Kulturlandschaften durch Straßen und Wege werden die Wanderwege der Amphibien oftmals abgeschnitten. Diese Gefahrenzonen sind den Amphibien nicht bewußt, so daß es zu einer erheblichen, den Artenbestand ernstlich gefährdenden Dezimierung der Tiere kommen kann. Auch die Gefährdung der Straßenbenutzer soll nicht verschwiegen werden.

Um die Tiere einerseits am Überqueren der Straßen zu hindern, andererseits aber dennoch zu den Laichplätzen und wieder zurückgelangen zu lassen, ist es bekannt, beiderseits von Straßen im Amphibien-Wanderbereich Leitwände aufzustellen. Sobald die Tiere eine derartige Leitwand erreichen, die ihnen den direkten Weg zu ihrem Ziel versperrt, wandern sie diese Leitwand entlang, um einen Durchschlupf zu finden. In gewissen Abständen werden nun zwischen den Leitwänden auf beiden Seiten einer Straße unter dieser durchführende Tunnel vorgesehen, die dann das ersehnte Schlupfloch für die Tiere bieten. Auf diese Weise ist ein gefahrloses Unterqueren der Straßen und Fahrwege möglich.

Aus der EP 273 338 B1 ist eine Amphibienleitwand bekannt, welche Wandelemente mit 1/4-kreisförmigen Querschnitten umfaßt. Zur Befestigung im Erdreich dient einerseits ein Flansch am einen Längsrand der Wandelemente, der mittels Pfläcken fest auf dem Boden gehalten werden kann. Die freien, überhängenden Längskanten der Wandelemente werden über längere Pflöcke abgestützt und ebenfalls fixiert. Bei dieser bekannten Anordnung wird es als nachteilig angesehen, daß beim Mähen des Bewuchses relativ leicht Beschädigungen sowohl an der Leitwand als auch am Mähwerk erzeugt werden.

Aus dem Deutschen Geschmacksmuster MR II 609 (Amtsgericht Landau) ist eine Amphibienleitwand aus Betonelementen bekannt, welche eine flache Sockelplatte und, mit dieser einstückig verbunden, eine sich hierüber bogenförmig wölbende Deckplatte umfaßt. Die Elemente der bekannten Leitwand sind jedoch sehr schwer zu handhaben und lassen sich trotz ihres hohen Gewichts relativ leicht umstoßen. Eine dauerhaft lückenlose Aufstellung ist kaum möglich.

Aus der DE 89 06 534 U1 ist eine Amphibienleitwand der eingangs genannten Art bekannt. Die dort vorgesehenen Sockelplatten sollen ins Erdreich eingegraben werden. Die Wandelemente sind flach ausgebildet und sollen senkrecht von den Sockelplatten bzw. vom Boden nach oben stehend in den Aufnahmeeinrichtungen befestigt werden. Bei dieser bekannten Leitwand wird es als nachteilig angesehen, daß die Aufstellung kompliziert, die Leitwirkung begrenzt und das Freihalten von Bewuchs schwierig sind.

Der Erfindung liegt die Aufgabe zugrunde, eine Amphibienleitwand der eingangs genannten Art auf einfache Weise dahingehend weiterzubilden, daß die Handhabung sowohl beim Aufstellen als auch bei der Pflege bei verbesserter Leitwirkung erleichtert wird.

Diese Aufgabe wird durch die im Kennzeichen des Patentanspruchs 1 angegebenen Merkmale gelöst.

Ein wesentlicher Punkt der Erfindung liegt darin, daß die Wandelemente zum einen bogenförmige überhängend ausgebildet sind, was die Leitwirkung verbessert, andererseits aber freitragend in die Aufnahmeeinrichtungen einsetzbar sind, so daß das Freihalten von Bewuchs erleichtert wird.

Vorzugsweise sind die Aufnahmeeinrichtungen, also die Stellen, von denen aus sich die Wandelemente nach oben (bogenförmig überhängend) erstrecken, in der Nähe der Längsränder der Sockelplatten angeordnet. Vorzugsweise ist die Anordnung hierbei derart, daß die Wandelemente von den Sockelplatten fortragen, also nicht dachförmig über dieser angeordnet sind. Bei dieser Anordnung kann man nämlich den vom Wandelement überdeckten Bereich des Bodens im wesentlichen unbearbeitet lassen und ihn dennoch leicht von Bewuchs freihalten. Auf der anderen Seite wird das Erdreich an die Wandelemente angeböscht, so daß die Sockelplatten überdeckt werden. Dies erleichtert ebenfalls die Pflege und führt darüber hinaus zu einer besonders festen und dennoch sehr einfach herzustellenden Verbindung der Leitwand-Elemente mit dem Boden. Insbesondere ist hierzu zu bemerken, daß Ausschachtungen nicht notwendig sind.

Die Sockelplatten werden in ihrem vom überhängenden Bereich der Wandelemente fortragenden Teil vorzugsweise mit nach oben offenen Wannen versehen, die als Wasserspeicher für das darüber liegende angeböschte Erdreich bzw. den dort angesiedelten Bewuchs dienen.

Im Bereich der Aufnahmeeinrichtungen werden die Sockelplatten vorzugsweise verdickt ausgebildet, so daß die Aufnahmeeinrichtungen keine wesentliche Schwächung der Sockelplatten mit sich bringen.

Die Sockelplatten weisen zwei parallele Längsseiten und zwei divergierende Querseiten auf, so daß sie eine Kontur im wesentlichen entsprechend einem gleichschenkeligen Trapez haben. Die längere der Parallelenseiten ist im Bereich der Aufnahmeeinrichtungen, also im Bereich der bodennahen Ränder der Wandelemente angeordnet. Durch diese Ausbildung der Sockelplatten ist es möglich, die aus einzelnen Elementen bestehende Leitwand jedem kurvenförmigen Straßenverlauf anzupassen.

An ihren bogenförmigen Rändern sind die Wandelemente vorzugsweise mit Falzabschnitten derart versehen, daß zwei aneinanderstoßende Wandelemente in diesem Falzbereich einander überdeckend miteinander verbindbar sind. Die Verbindung erfolgt hierbei vorzugsweise durch eine Verschraubung der Wandelemente miteinander. Die Verschraubung wird vorzugsweise im Bereich der freien Enden der Wandelemente vorgenommen.

Die Wandelemente sind vorzugsweise im wesentlichen 1/4-kreisförmig gebogen und weisen an ihren äußeren, freien Längskanten einen nach unten bzw. zum Biegungsmittelpunkt abgeknickten Rand auf. Dadurch wird zum einen die Gefahr vermindert, daß man sich an den freien Enden verletzt, zum anderen wird die Steifigkeit und insbesondere die Tragfähigkeit der Wandelemente erheblich erhöht.

Die Aufnahmeeinrichtungen umfassen vorzugsweise nach oben offene Schlitze, in welche die Wandelemente mit ihren (unteren) Rändern einsetzbar sind. Auf diese Weise ist ein sicheres Halten der Wandelemente zur Aufnahme auch höherer Biegemomente möglich.

Die Schlitze sind hierbei vorzugsweise sich nach oben erweiternd ausgebildet, wobei die dem überhängenden Bereich der Wandelemente zugewandte Schlitzwand der Bogenform der Wandelemente entsprechend ausgebildet ist. Auf diese Weise ist ein ganzflächiges Aufliegen der Wandelemente sichergestellt.

Weiterhin sind die Aufnahmeeinrichtungen vorzugsweise mit Löchern versehen, welche quer zur Längsrichtung der Schlitze verlaufen. Durch diese Löcher können selbstschneidende Schrauben in die Wandelemente (diese durchsetzend) eingeschraubt werden, so daß eine (insbesondere gegen Vandalismus) sichere Verbindung der Wandelemente mit den Sockelplatten gegeben ist, die aber dennoch zu Reparaturarbeiten lösbar ist.

Die Sockelplatten werden vorzugsweise aus Beton gefertigt. Dadurch erhalten sie das nötige Eigengewicht und sind recht kostengünstig herstellbar. Die Wandelemente werden jedoch aus Kunststoff gefertigt, so daß trotz geringer Wandstärke eine hinreichende Festigkeit sichergestellt werden kann. Beim Aufstellen erfordert die so ausgebildete zweiteilige Leitwand keinen hohen Kraftaufwand. Vorzugsweise wird hierbei rezyklierter Kunststoff (Polyolephine) benutzt, deren Umweltverträglichkeit dem hier vorliegenden Zweck angepaßt ist.

Zum Verlegen der Leitwand geht man nun wie folgt vor:
- Das Gelände wird geebnet, wobei eventuell eine dünne Sandschicht aufgebracht wird;
- die Sockelplatten werden aneinanderstoßend ausgelegt;
- in die Schlitze der Sockelplatten werden die Wandelemente eingesteckt;
- die Wandelemente werden durch Schrauben in den Sockelplatten gesichert;
- die aneinanderstoßenden Wandelemente werden an den Stößen verschraubt;
- die Sockelplatten werden in ihren den Wandelementen abgewandten Bereichen mit ca. 10-20 cm Erdreich vorzugsweise unter Anböschung an die Wandelemente aufgefüllt.

Nachfolgend werden bevorzugte Ausführungsformen der Erfindung anhand von Abbildungen näher erläutert. Hierbei zeigen:
- Fig. 1: die perspektivische Ansicht einer zusammengebauten Amphibienleitwand gemäß einer Ausführungsform der Erfindung,
- Fig. 2: einen Querschnitt durch die Leitwand nach Fig. 1,
- Fig. 3 und 4: Querschnittszeichnungen der Einzelteile der Leitwand nach Fig. 2,
- Fig. 5: eine Draufsicht auf eine Sockelplatte nach Fig. 3,
- Fig. 6: einen Schnitt entland der Linie VI-VI aus Fig. 5,
- Fig. 7: eine vollständig aufgebaute Amphibienleitwand, und
- Fig. 8: eine Ansicht entsprechend der in Fig. 3 durch eine weitere bevorzugte Ausführungsform der Erfindung.

In der nachfolgenden Beschreibung werden gleiche oder gleich wirkende Teile mit denselben Bezugsziffern benannt.

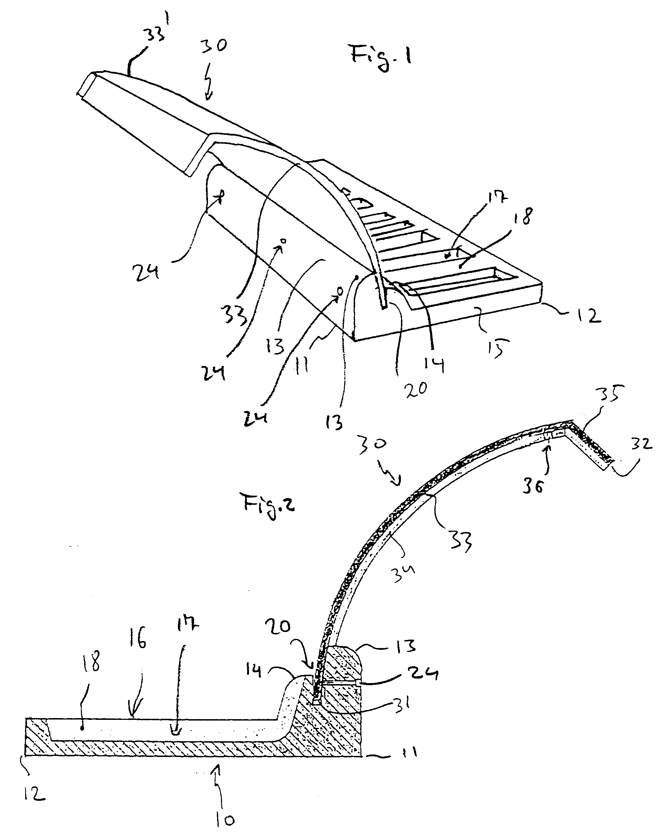

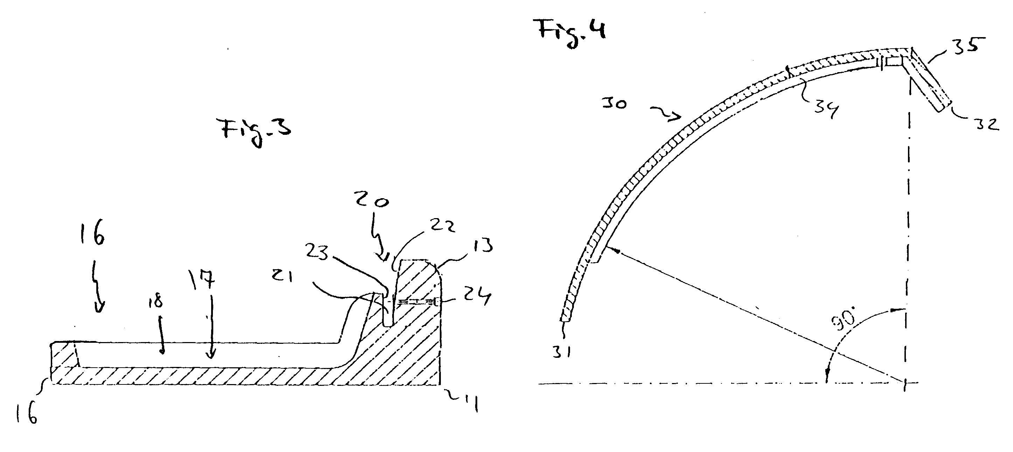

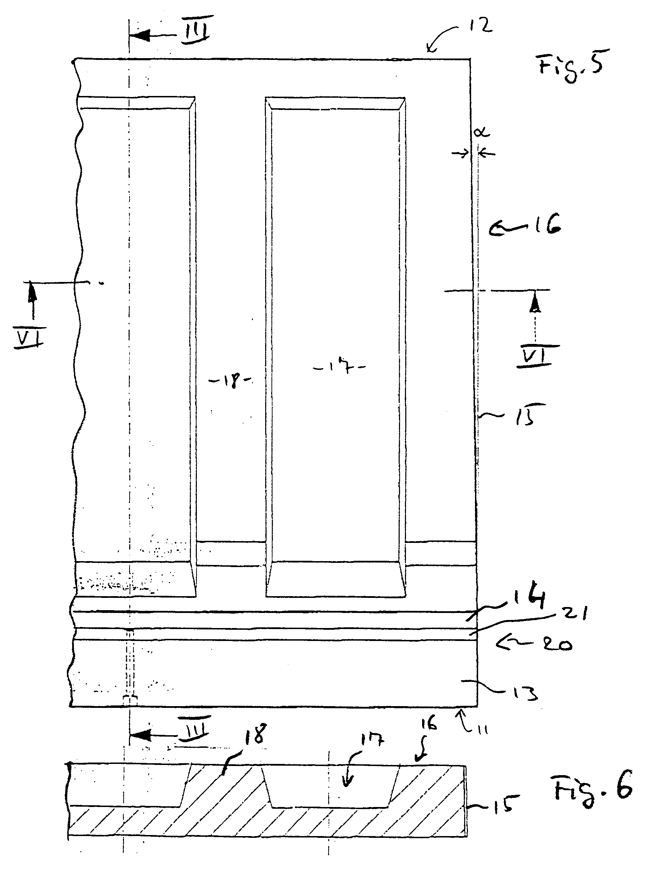

Die in den Figuren 1 bis 6 gezeigte erfindungsgemäße Amphibienleitwand umfaßt eine aus Beton gegossene Sockelplatte 10, deren vorderer Längsrand 11 parallel zum hinteren Längsrand 12 verläuft. Die Seitenränder 15, 15' sind in Richtung auf den hinteren Längsrand 12 leicht konvergierend angeordnet, wie dies in Fig. 5 mit dem Winkel α angedeutet ist.

In der Nähe des vorderen Längsrandes 11 sind Aufnahmeeinrichtungen 20 vorgesehen. Diese umfassen einen inneren Wulst 13 und einen äußeren Wulst 14. Der innere Wulst 13 ist höher als der äußere Wulst 14. Zwischen dem äußeren und dem inneren Wulst ist ein Schlitz 21 vorgesehen.

Die dem vorderen Längsrand 11 zugewandte äußere Schlitzwand 22 ist bogenförmig verlaufend ausgebildet, während die gegenüberliegende, innere Schlitzwand 23 im wesentlichen geradlinig, aber derart leicht geneigt zur Senktrechten verläuft, daß ein leichtes Entformen des Beton-Gußteils gewährleistet ist.

Der innere Wulst 13 wird von Löchern 24 durchsetzt, welche im wesentlichen senkrecht in den Schlitz 21 mündet.

Zwischen dem äußeren Wulst 14 und dem hinteren Längsrand 12 der Sockelplatte 10, also in dem von den Aufnahmeeinrichtungen 20 fortragenden Teil 16 ist die Sockelplatte 10 als flacher Körper ausgebildet. Auf ihrer oberen Seite weist sie wannenförmige Ausnehmungen 17 auf, welche durch Rippen 18 voneinander getrennt sind.

Das aus Kunstharz gefertigte Wandelement 30 weist einen im wesentlichen 1/4-kreisförmig gebogenen Querschnitt auf, wie dies in Fig. 4 angedeutet ist. Seine innere bzw. untere Längskante 31 begrenzt den bogenförmigen Bereich. Am anderen Ende geht der bogenförmige Bereich über eine scharfe Biegung bzw. einen "Knick" in einen Rand 35 gegenüber, der flachbandförmig verläuft.

Die bogenförmigen Ränder 33, 33' verlaufen in Ebenen, welche im wesentlichen senkrecht zu den Längskanten 31, 32 gerichtet sind und weisen einen Falzabschnitt 34 auf, welcher derart ausgebildet ist, daß zwei aneinandergrenzende Wandelemente 30 in diesem Bereich einander überlappend zusammengebracht werden können. Weiterhin sind Befestigungsbohrungen 36 vorgesehen, mittels derer zwei aneinandergrenzende (sich überlappende) Wandelemente durch Schrauben verbunden werden können.

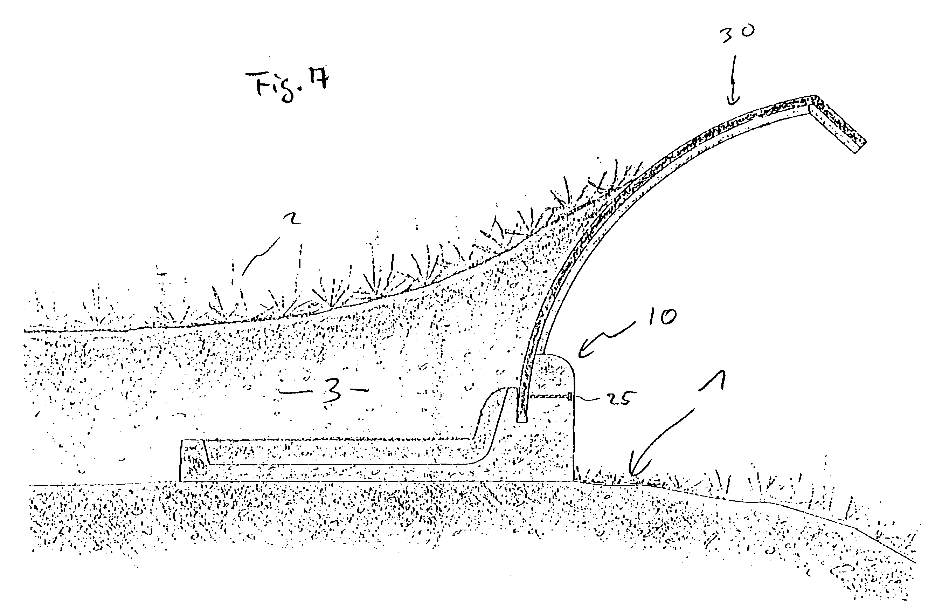

Die Verlegung erfolgt nun folgendermaßen:
1. Zunächst wird das Gelände geebnet, evtl. wird eine dünne Sandschicht aufgebracht.
2. Auf dem Boden 1 (siehe Fig. 7) werden die Fußplatten nebeneinander ausgelegt.
3. Nun werden in die Schlitze 21 Wandelemente 30 mit ihrer inneren Längskante 31 nach unten eingesetzt, wobei durch die Konizität der Schlitzwände 22, 23 bereits eine gewisse Klemmwirkung auftritt.
4. Nun werden in die Löcher 24 selbstschneidende Schrauben 25 eingesetzt und in die Wandelemente 30 eingeschraubt.
5. An den Stößen werden die Leitwände 30 mittels Schrauben, die in die Bohrungen 36 eingesetzt sind, verschraubt.
6. Abschließend wird Erdreich 3 so aufgeschüttet, daß es den fortragenden Teil 16 der Sockelplatte 20 überdeckt (und die Wannen 17 füllt), wobei die Anfüllung auch als Anböschung bis in etwa den mittleren Bereich der Wandelemente 30 erfolgen kann.

Abschließend kann Saatgut auf dem Erdreich 3 ausgebracht werden, so daß ein Bewuchs 2 entsteht. Dadurch ergibt sich nicht nur eine optisch vorteilhafte Anpassung der Amphibienleitwand an die Umgebung, sondern auch eine erhöhte Festigkeit der Anordnung bzw. Verankerung mit dem Boden.

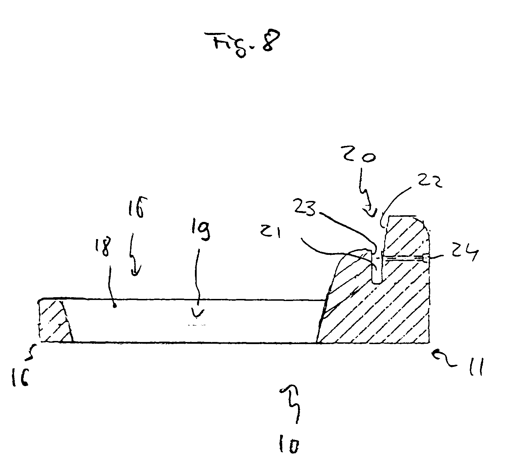

Bei der in Fig. 8 gezeigten Ausführungsform der Erfindung sind anstelle der Wannen 17 durchgehende Durchbrüche 19 vorgesehen, so daß der von der Aufnahmeeinrichtung 20 fortra gende Teil 16 der Sockelplatte 10 eine Art Gitterwerk bildet. Wenn eine mit solchen Sockelplatten 10 versehene Amphibienleitwand wie in Fig. 7 gezeigt ausgelegt ist, so kann das Wurzelwerk des Bewuchses 2 die Rippen 18 durchdringen und in den Mutterboden einwachsen. Durch die so eintretende Verfestigung des Erdreiches ergibt sich eine weitere Verbesserung der Verbindung zwischen den Sockelplatten 10 und dem Boden 1.

### Bezugszeichenliste

- 1: Boden
- 2: Bewuchs
- 3: Erdreich
- 10: Sockelplatte
- 11: vordere Längskante
- 12: hintere Längskante
- 13: innerer Wulst
- 14: äußerer Wulst
- 15: Seitenrand
- 16: fortragender Teil
- 17: Wanne
- 18: Rippe
- 19: Durchbruch
- 20: Aufnahmeeinrichtung
- 21: Schlitz
- 22: äußere Schlitzwand
- 23: innere Schlitzwand
- 24: Loch
- 25: Schraube
- 30: Wandelement
- 31: innere Längskante
- 32: äußere Längskante
- 33: bogenförmiger Rand
- 34: Falzabschnitt
- 35: Rand
- 36: Bohrung

## Patentansprüche

1. Amphibienleitwand, umfassend Sockelplatten (10) mit Aufnahmeeinrichtungen (20) zum Einsetzen von Wandelementen (30),
**dadurch gekennzeichnet**,
daß die Wandelemente (30) bogenförmig überhängend ausgebildet und freitragend in die Aufnahmeeinrichtungen (20) einsetzbar sind.

2. Amphibienleitwand nach Anspruch 1,
**dadurch gekennzeichnet**,
daß die Aufnahmeeinrichtungen (20) bei Längsrändern (11, 12) der Sockelplatten (10) angeordnet sind.

3. Amphibienleitwand nach einem der vorhergehenden Ansprüche,
**dadurch gekennzeichnet**,
daß die Aufnahmeeinrichtungen (20) und die Wandelemente (30) derart ausgebildet sind, daß die Wandelemente (30) von den Sockelplatten (10) fortragend einsetzbar sind.

4. Amphibienleitwand nach Anspruch 3,
**dadurch gekennzeichnet**,
daß die Sockelplatten (10) in ihrem von den Aufnahmeeinrichtungen (20) und dem überhängenden Bereich der Wandelmente (30) fortragenden Teilen (16) nach oben offene Wannenelemente (17) aufweisen.

5. Amphibienleitwand nach Anspruch 3,
**dadurch gekennzeichnet**,
daß die Sockelplatten (10) in ihren von den Aufnahmeeinrichtungen (20) und vom überhängenden Bereich der Wandelemente (30) fortragenden Teilen (16) durchgehende Ausnehmungen oder Durchbrüche (19) aufweisen.

6. Amphibienleitwand nach einem der vorhergehenden Ansprüche,
**dadurch gekennzeichnet**,
daß die Sockelplatten (10) im Bereich der Aufnahmeeinrichtungen (20) verdickt (Wulst 13, 14) ausgebildet sind.

7. Amphibienleitwand nach einem der vorhergehenden Ansprüche,
**dadurch gekennzeichnet**,
daß die Sockelplatten (10) in der Boden- bzw. Horizontalebene eine Kontur im wesentlichen entsprechend einem gleichschenkeligen Trapez aufweisen, wobei die längere (11) der parallelen Seiten (11, 12) im Bereich der Aufnahmeeinrichtungen (20) angeordnet ist.

8. Amphibienleitwand nach einem der vorhergehenden Ansprüche,
**dadurch gekennzeichnet**,
daß die Wandelemente (30) an ihren bogenförmigen Rändern (33, 33') Falzabschnitte (34) zur überlappenden Aneinanderreihung und Befestigung vorzugsweise mit Verschraubung mit weiteren Wandelementen (30) aufweisen.

9. Verfahren zum Einbau einer Amphibienleitwand nach Anspruch 4,
**dadurch gekennzeichnet**,
daß nach einem Verlegen der Sockelplatten (10) und einem Einsetzen der Wandelemente (30) in die Aufnahmeeinrichtungen (20) auf die fortragenden Teile (16) Erdreich aufgetragen wird, wobei vorzugsweise das Erdreich an die Wandelemente angeböscht wird und wobei vorzugsweise Samen für einen späteren Bewuchs aufgetragen wird.

## Claims

1. A guiding wall for amphibians, comprising base plates (10) with receiving devices (20) for the insertion of wall members (30), **characterised in that** the wall members (30) are formed to be curved and overhanging, and can be inserted into the receiving devices (20) in a cantilevered manner.

2. A guiding wall for amphibians in accordance with claim 1, **characterised in that** the receiving devices (20) are arranged at longitudinal edges (11, 12) of the base plates (10).

3. A guiding wall for amphibians in accordance with one of the preceding claims, **characterised in that** the receiving devices (20) and the wall members (30) are formed in such a way that the wall members (30) can be inserted so as to project away from the base plates (10).

4. A guiding wall for amphibians in accordance with claim 3, **characterised in that** trough-shaped members (17), which are open upwards, are provided in those parts (16) of the base plates (10) which project away from the receiving devices (20) and the overhanging region of the wall members (30).

5. A guiding wall for amphibians in accordance with claim 3, **characterised in that** through recesses or apertures (19) are provided in those parts (16) of the base plates (10) which project away from the receiving devices (20) and the overhanging region of the wall members (30).

6. A guiding wall for amphibians in accordance with one of the preceding claims, **characterised in that** the base plates (10) are formed to be thicker (swelling 13, 14) in the vicinity of the receiving devices (20).

7. A guiding wall for amphibians in accordance with one of the preceding claims, **characterised in that** in the plane of the ground or the horizontal plane, the base plates (10) have an outline substantially corresponding to an isosceles trapezium, the longer (11) of the parallel sides (11, 12) being arranged in the vicinity of the receiving devices (20).

8. A guiding wall for amphibians in accordance with one of the preceding claims, **characterised in that** the wall members (30) have rebate portions (34) at their curved edges (33, 33'), for overlapping arrangement in a row, and for securing, preferably by screw connections to further wall members (30).

9. A process for assembling a guiding wall for amphibians in accordance with claim 4, **characterised in that** after the base plates (10) have been laid and after the wall members (30) have been inserted into the receiving devices (20), soil is applied to the projecting parts (16), preferably so as to form a slope against the wall members, and seeds are preferably applied for subsequent growth of vegetation.

## Revendications

1. Ecran de déviation pour amphibies, comprenant des plaques de fondation (10) avec des systèmes de réception (20) pour l'insertion d'éléments de paroi (30), **caractérisé en ce** que les éléments de paroi (30) présentent une forme en arc en surplomb et peuvent être montés en porte à faux dans les systèmes de réception (20).

2. Ecran de déviation pour amphibies selon la revendication 1, caractérisé en ce que les systèmes de réception (20) sont disposés aux bords longitudinaux (11, 12) des plaques de fondation (10).

3. Ecran de déviation pour amphibies selon l'une des revendications précédentes, caractérisé en ce que les systèmes de réception (20) et les éléments de paroi (30) sont conformés de telle façon que les éléments de paroi (30) peuvent être mis en place de manière à s'écarter des plaques de fondation (10).

4. Ecran de déviation pour amphibies selon la revendication 3, caractérisé en ce que les parties (16) des plaques de fondation (10) dépassant des systèmes de réception (20) et de la région en surplomb des éléments de paroi (30), comprennent des éléments de cuvette (17) ouverts vers le haut.

5. Ecran de déviation pour amphibies selon la revendication 3, caractérisé en ce que les parties (16) des plaques de fondation (10) dépassant des systèmes de réception (20) et de la région en surplomb des éléments de paroi (30) présentent des évidements ou ajours (19) continus.

6. Ecran de déviation pour amphibies selon l'une des revendications précédentes, caractérisé en ce que les plaques de fondation (10) présentent un épaississement (bourrelet 13, 14) dans la région des systèmes de réception (20).

7. Ecran de déviation pour amphibies selon l'une des revendications précédentes, caractérisé en ce que les plaques de fondation (10) présentent dans le plan du fond et respectivement dans le plan horizontal un contour qui correspond sensiblement à un trapèze isocèle, le plus long (11) des côtés parallèles (11, 12) se situant dans la région des systèmes de réception (20).

8. Ecran de déviation pour amphibies selon l'une des revendications précédentes, caractérisé en ce que les éléments de paroi (30) présentent, à leurs bords arqués (33, 33') des sections de pliage (34) pour la juxtaposition à recouvrement et la fixation, de préférence par vissage, avec d'autres éléments de paroi (30).

9. Procédé pour le montage d'un écran de déviation pour amphibies selon la revendication 4, caractérisé en ce que, après une pose des plaques de fondation (10) et une mise en place des éléments de paroi (30) dans les systèmes de réception (20), les éléments en saillie (16) sont recouverts de terre, la terre étant avantageusement talutée sur les éléments de paroi et des graines étant avantageusement semées en vue d'une végétation ultérieure.
